# EUROPEAN PATENT APPLICATION

(11) **EP 1 772 841 A1**
(43) Date of publication of application: **11.04.2007**
(21) Application number: 06255134.6
(22) Date of filing: 04.10.2006
(51) Int. Cl.: G09G 3/20

(54) **Display method of digital display device and digital display device**

(30) Priority: 05.10.2005 JP 2005292832
(71) Applicant: Fujitsu Hitachi Plasma Display Limited, Higashimorokata-gun Miyazaki 880-1194 (JP)
(72) Inventor: Momose, Rei Fujitsu Hitachi Plasma Display Ltd., Miyazaki-ken 880-1194 (JP); Tajima, Masaya Fujitsu Hitachi Plasma Display Ltd., Miyazaki-ken 880-1194 (JP); Kojima, Ayahito Fujitsu Hitachi Plasma Display Ltd, Miyazaki-ken 880-1194 (JP)
(74) Representative: Calderbank, Thomas Roger

(57) **Abstract**

In an image signal processing unit in a Plasma Display Panel device, a noise reducer unit is provided at a former stage of an error diffusion processing unit. The noise reducer unit has a Lox-Pass Filter to input display data and an edge determining unit and a level determining unit to the Low-Pass Filter. Switching between an output which has passed through the Low-Pass Filter and an output which has not passed through the LPF is performed in a data selecting unit according to a pixel region in display data based upon respective determination results, and the selected signal is outputted as output display data. Noise contained in the input display data is reduced by the noise reducer unit while maintaining the sharpness of an image. Accordingly, a technology capable of eliminating or reducing noise in display data while maintaining sharpness of a display image is provided for digital display.

## Description

The present invention relates to a technology for a digital display device which is used as a television set, a display terminal of a computer or the like and a display method of the digital display device. In particular, it relates to a technology for signal processing of display data (digital signals).

As a conventional digital display device, for example, a plasma display device (abbreviated "PDP device") including a plasma display panel (abbreviated "PDP") and its display control and drive circuit unit has been known. For example, in a signal processing of display data for the displaying on the PDP in the PDP device, noise is generated in some cases in a displayed image on the PDP due to combinations of a plurality of processings. For example, the combinations of the plurality of processings include a combination of an error diffusion processing and a data conversion processing for PDP output at a latter stage thereof. As the generation of noise, the case where noise is generated at a specific grayscale in an image is known. As addressing means to the noise, conventionally, the noise in display data or an image is eliminated or reduced by adding another processing, for example, a dither processing to the combination of the plurality of processings. For example, a dither processing step is added to a former stage of an error diffusion processing step.

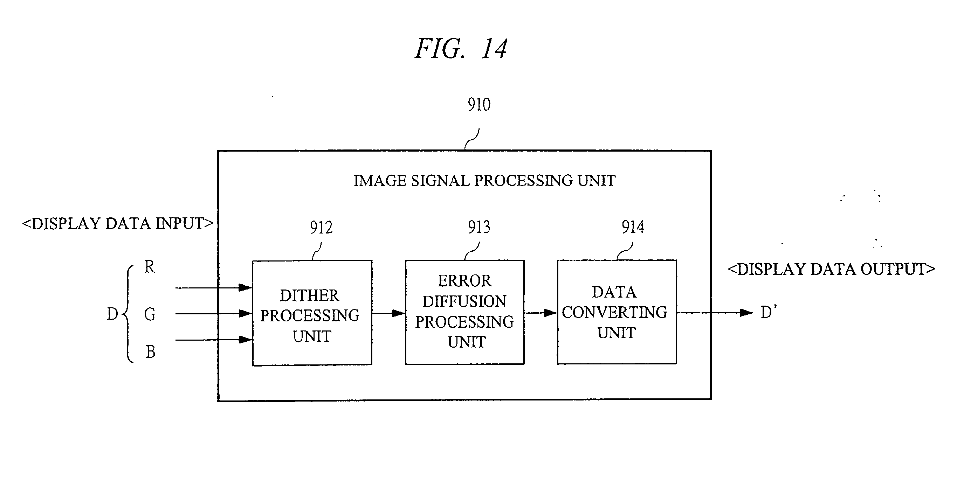

FIG. 14 shows a configuration example of a conventional image signal processing unit 910 in a display method for performing the noise-reduction processing as described above. A conventional PDP device or the like includes the image signal processing unit 910 for performing a noise-reduction processing to display data. As display data externally inputted in the image signal processing unit 910, there is display data D with RGB format composed of respective signals of R (red), G (green), and B (blue). The input display data (input digital signal) D is first inputted into a dither processing unit 912 and then subjected to a dither processing. An output from the dither processing unit 912 is next inputted into an error diffusion processing unit 913 and then subjected to an error diffusion processing. An output from the error diffusion processing unit 913 is next inputted into a data conversion unit 914 and then subjected to data conversion for outputting to a display panel unit, and it is finally outputted as output display data (output digital signal) D'. The error diffusion processing is one of the processings for pseudo-grayscale expression.

In the conventional art, noise caused by the combination of a plurality of processings is addressed in a signal processing of display data for a PDP device by adding another processing such as the dither processing as described above. Also, when input signal in the image signal processing unit 910 in the PDP device is digital data itself, namely, in such a case where the input signal is not data based upon analog input but it is data directly produced by a computer, noise reduction effect can be achieved by the display method described above. However, when an input signal is data based upon the analog input, namely, when the input signal is data obtained by performing D/A conversion from an analog signal to a digital signal or the like, noise reduction effect achieved by application of the display method is small due to the influence of the internal noise of the input signal. Therefore, a problem of generation of noise, that is, noise is generated at a specific grayscale still remains unsolved.

The present invention has been made in view of these circumstances, and a desired aim of the present invention is to prove a technology which desirably may solve the above-described problem and eliminate or reduce the noise in display data while maintaining fineness of a displayed image on a digital display device.

The typical ones of the inventions disclosed in this application will be briefly described as follows. In order to achieve the above object, the present invention provides a technology for performing a processing of display data (digital signal) relating to a digital display device and its display control and drive circuit unit (controller and driver), and it includes technical means described below.

In a digital display device and a display method according to the present invention, a low-pass filter (abbreviated as LPF) is provided at a former stage of an error diffusion processing means so that application of the LPF, namely, switching and selecting of ON/OFF of an LPF processing is performed according to a pixel region in the display data. The means for performing edge determination and/or level determination of display data is used to select the LPF passing signal/non-passing signal according to the determination. By this means, noise contained in a digital signal that is an input display data, especially, noise due to analog signal input (namely, a signal/data obtained by converting an original analog signal to a digital signal) is reduced while maintaining the fineness of an image. For example, the details thereof are as follows:

In a signal processing of display data (digital signal inputted externally) in the digital display device of the present invention and a circuit unit (means that performs a signal processing) included therein, noise reducing means that selectively applies low-pass filtering using the LPF to a signal before being subjected to the error diffusion processing according to the display data to achieve reduction of noise contained a digital signal of display data is provided. Means that performs an error diffusion processing to the display data after being subjected to the noise reduction processing is further provided.

First, the noise reducing means has edge determining means that determines that the pixel is an edge portion (or an LPF non-application pixel region) in the image based upon the comparison between a pixel value in an image of display data and a set edge level (EL) value. A pixel region that has been determined as the edge portion by the edge determining means bypasses (does not pass) the LPF or the LPF is turned OFF, while the other pixel region passes through the LPF or the LPF to the other pixel region is turned ON.

In the display method according to the present invention, when a difference in grayscale level between a target pixel in display data and a pixel that is spatially positioned adjacent thereto exceeds, for example, a predetermined EL in the low-pass filtering performed by the LPF, it is determined that the target pixel is an edge portion.

Second, the noise reducing means has a level determining means which determines that the pixel is in a signal (grayscale) level that does not require low-pass filtering (or LPF non-application pixel region) based upon comparison between a signal (grayscale) level after low-pass filtering of display data in the LPF and a predetermined filter application level (referred to as FL) value. A pixel region that has been determined to be in the signal level that does not require the filtering by the level determining means is caused to bypass the LPF, while the other pixel region is caused to pass through the LPF.

In the display method according to the present invention, when a signal level after the low-pass filtering in display data is out of a range of the predetermined FL value in the low-pass filtering performed by the LPF, it is determined that the pixel is in the level that does not require the filtering.

By the edge determination, the filter application level determination, and the means for selective application of the LPF according to the results of these determination, the low-pass filtering is performed according to the pixel region in the display data, so that the noise, especially, a specific grayscale noise is eliminated or reduced while maintaining the fineness of an image based upon the output of the display data.

Third, the noise reducing means has a plurality of LPFs different in characteristic, means for switching these LPFs, and noise level determining means that determines a level of noise contained in the input display data. An appropriate LPF is selected and applied from the plurality of LPFs according to a determination result of the noise level determining means based upon the input display data. Accordingly, further effective filtering can be performed for the respective pixel regions.

A digital signal of the input display data is data originally produced through a digital processing in a computer or data especially obtained by converting an original analog signal to a digital signal (through AD conversion processing or other signal processings). Also, the input display data is data in a format having a grayscale level value (for example, 8 bits/256 grayscales) for each of R, G, and B. Further, the display unit is a display panel having display cell groups whose display grayscales can be controlled, for example, a PDP. Besides, the means for performing the signal processing may include an inverse γ correction processing unit, a dither processing unit, and the like.

Effects obtained by representative ones of the inventions disclosed in this application will be briefly described below. According to the present invention, noise in display data can be reduced in the display on a digital display device while maintaining the fineness of an image. Especially, even in a case of the display data (digital signal) obtained from the analog signal input, it is possible to reproduce a fine image by reducing the noise due to the analog signal input.

IN THE DRAWINGS:
FIG. 1 is a whole configuration diagram of a plasma display device which is a digital display device according to an embodiment of the present invention;
FIG. 2 is an exploded view showing a structure of a plasma display panel in the plasma display device which is the digital display device according to the embodiment of the present invention;
FIG. 3 is a diagram showing a field configuration in a sub-field method in a plasma display device which is the digital display device according to the embodiment of the present invention;
FIG. 4A is a function block configuration diagram of an image signal processing unit to which a display method in the digital display device according to the embodiment of the present invention has been applied;
FIG. 4B is a function block configuration diagram of another image signal processing unit to which a display method in the digital display device according to the embodiment of the present invention has been applied;
FIG. 5 is a function block configuration diagram of a noise reducer unit in an image processing unit in a digital display device according to a first embodiment of the present invention;
FIG. 6A is a diagram showing an example of display data and processing in the digital display device according to the first embodiment of the present invention, in which an example of an original image is illustrated;
FIG. 6B is a diagram showing an example of display data and processing in the digital display device according to the first embodiment of the present invention, in which an image obtained when all pixels in the image shown in FIG. 6A have been subjected to low-pass filtering is illustrated;
FIG. 7A is a diagram showing an example of a signal waveform of display data in the digital display device according to the first embodiment of the present invention, in which an example of a digital input signal is illustrate;
FIG. 7B is a diagram showing an example of a signal waveform of display data in the digital display device according to the first embodiment of the present invention, in which an example of an analog input signal corresponding to the digital input signal shown in FIG. 7A is illustrated;
FIG. 8 is a diagram showing an example of a processing to display data in the digital display device according to the first embodiment of the present invention, in which pixels after performing an edge determination to the image shown in FIG. 6A are illustrated;
FIG. 9A is a diagram of a graph (γ=1.0) showing a relationship between inputted grayscale of display data and grayscale after inverse γ correction in the digital display device according to the first embodiment of the present invention;
FIG. 9B is a diagram of a graph (γ=2.2) showing a relationship between inputted grayscale of display data and grayscale after inverse γ correction in the digital display device according to the first embodiment of the present invention and an example of the settings of grayscale areas and edge levels;
FIG. 10 is a diagram showing a configuration example of an edge determining unit in a noise reducer unit in the digital display device according to the first embodiment of the present invention;
FIG. 11 is a diagram showing a sub-field lighting pattern in a plasma display device which is the digital display device according to the first embodiment of the present invention;
FIG. 12 is a diagram showing an example of an error diffusion processing in an image signal processing unit in the plasma display device which is the digital display device according to the first embodiment of the present invention;
FIG. 13 is a function block configuration diagram of the noise reducer unit in an image signal processing unit in a digital display device according to a second embodiment of the present invention; and
FIG. 14 is a function block configuration diagram of an image signal processing unit in a digital display device and a display method thereof in the prior art.

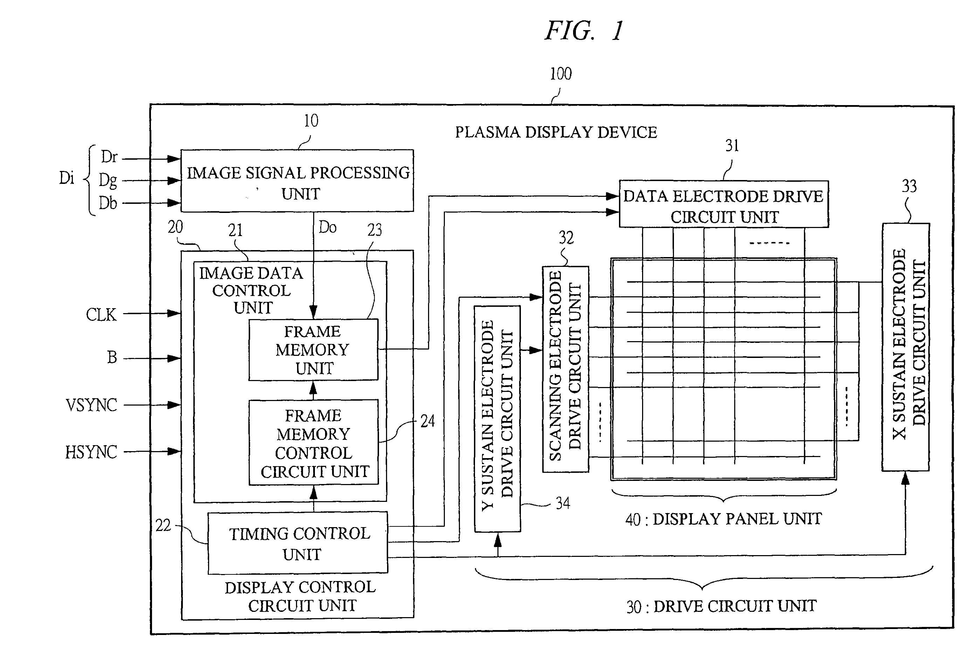

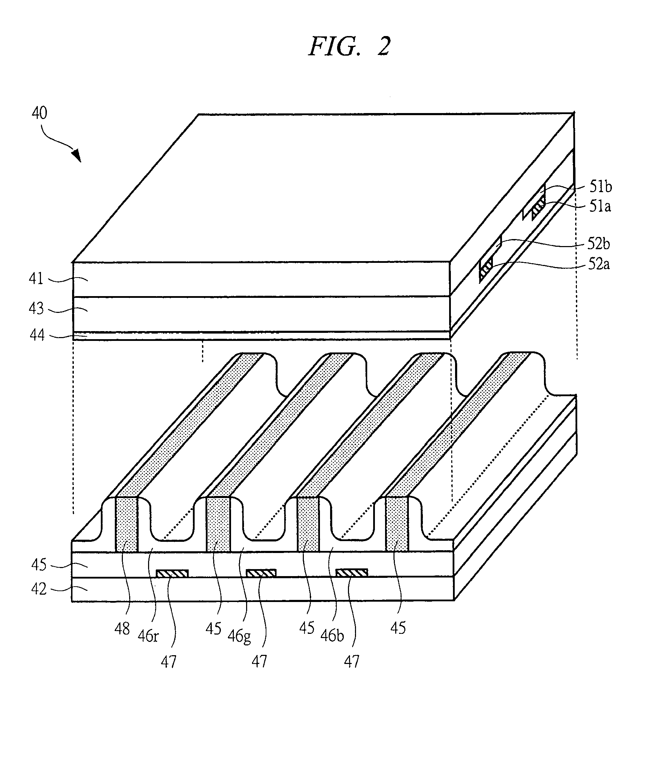

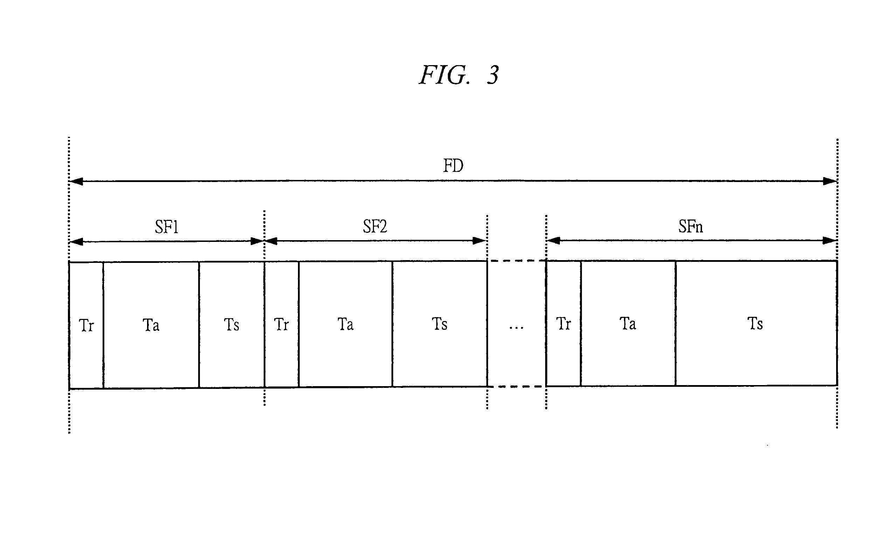

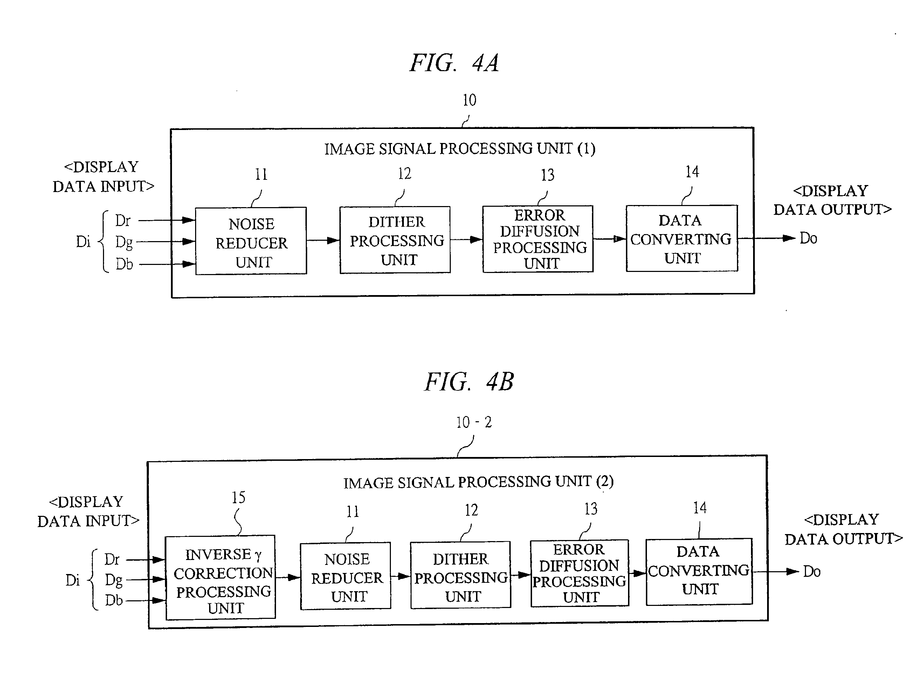

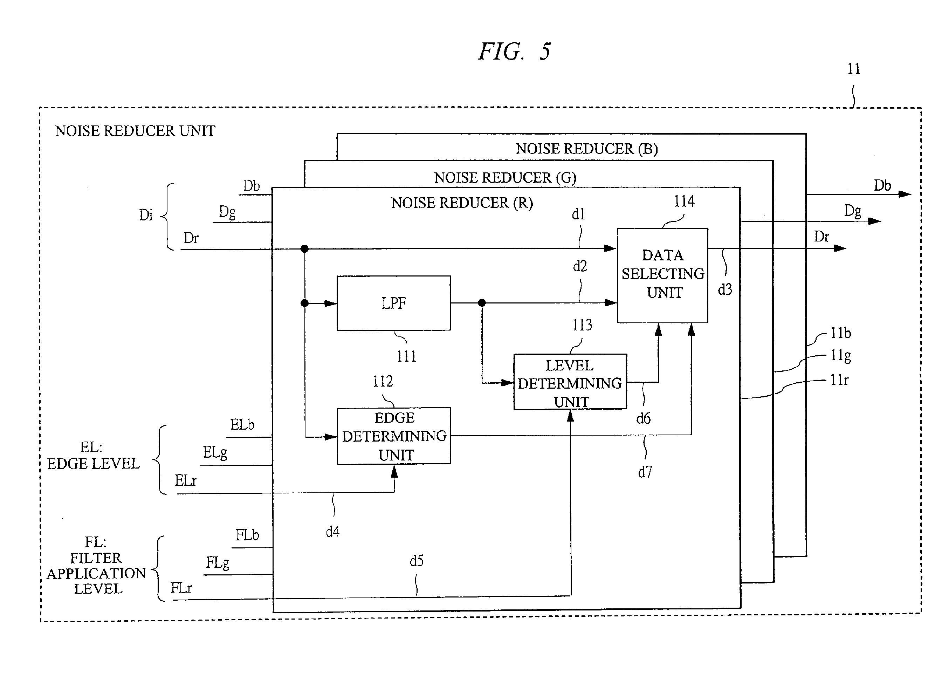

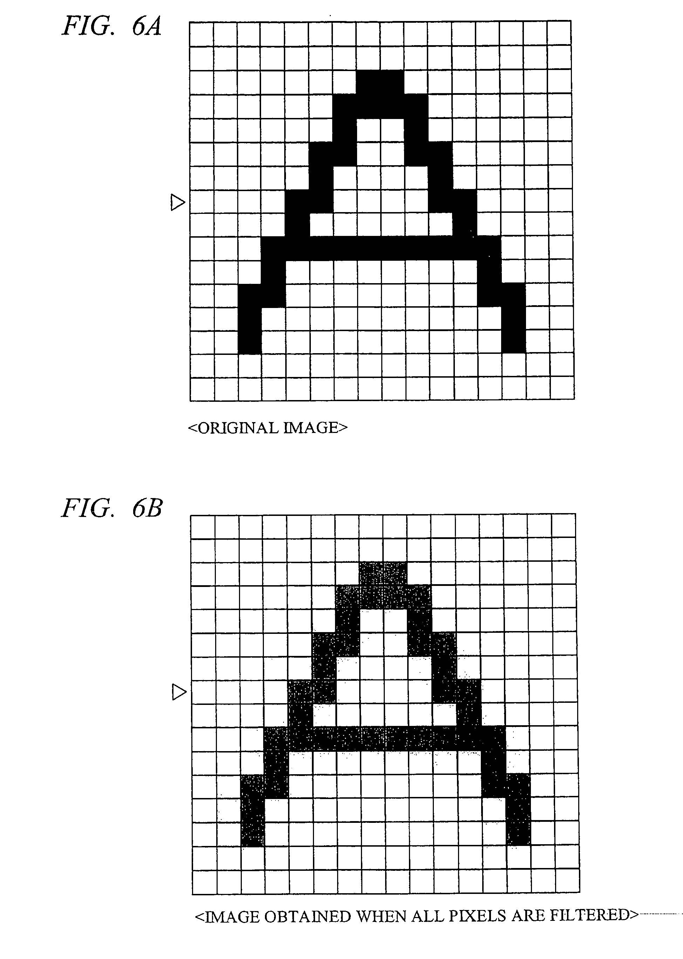

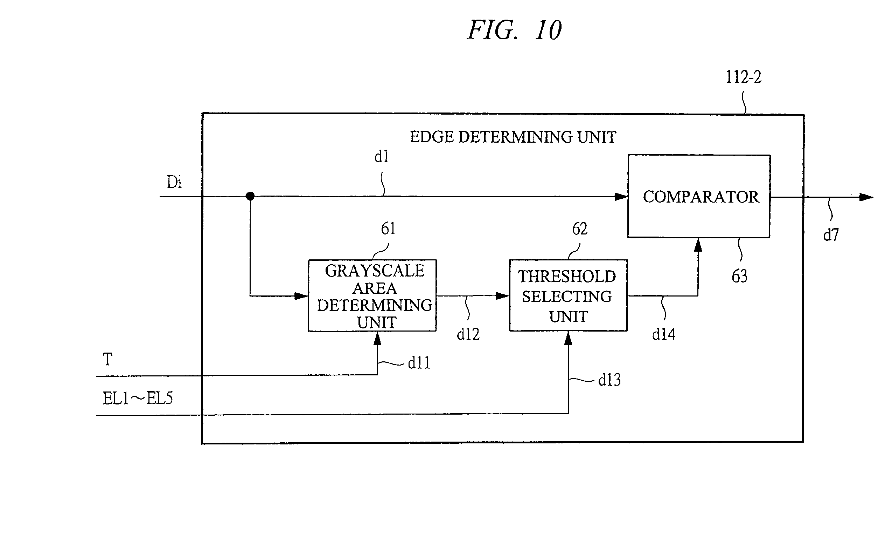

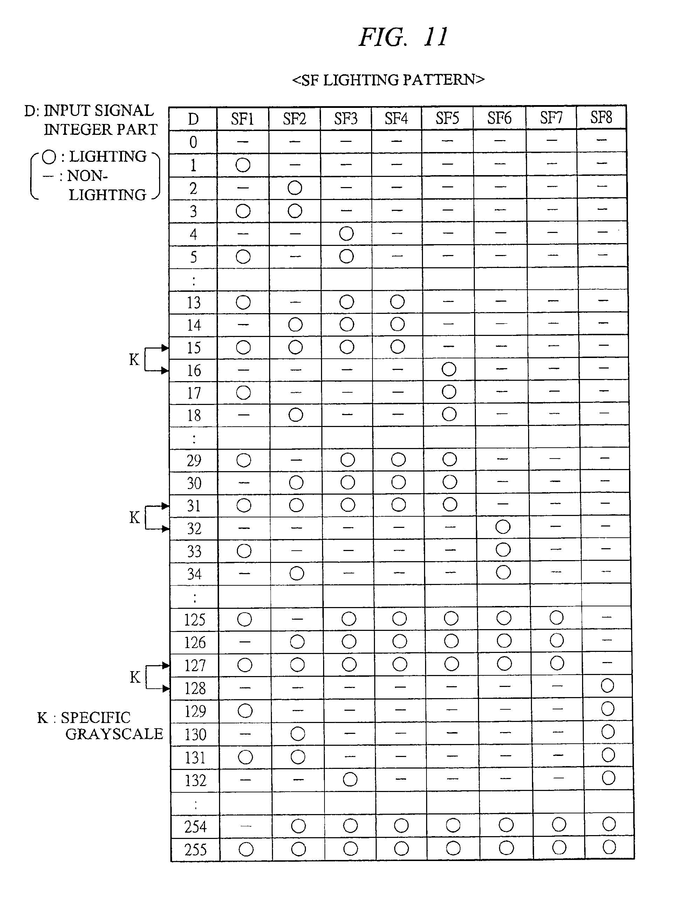

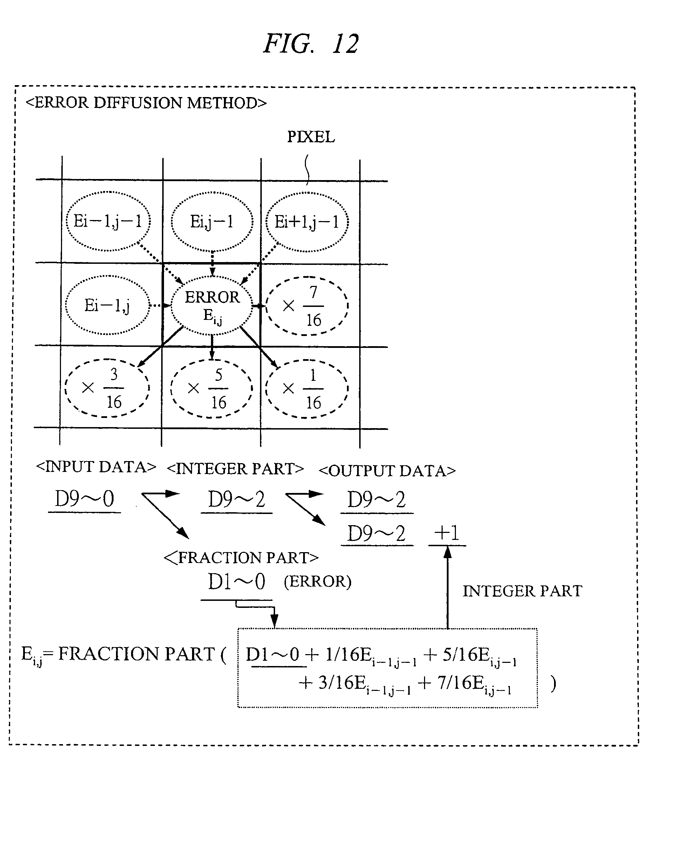

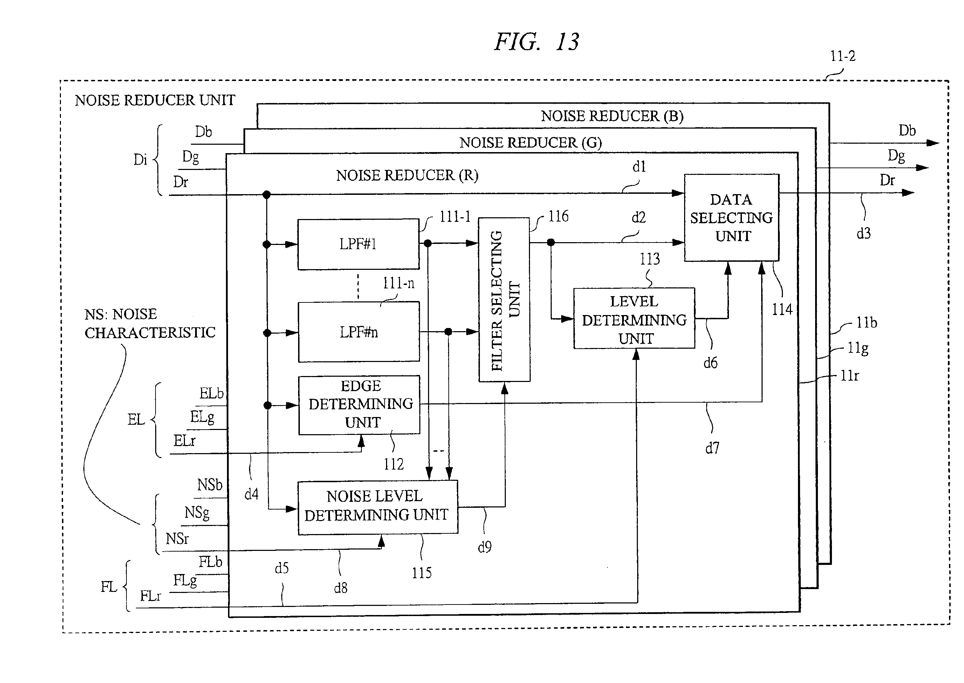

Hereinafter, embodiments of the present invention will be described in detail with reference to the accompanying drawings. Note that components having the same function are denoted by the same reference symbols throughout the drawings for describing the embodiment, and the repetitive description thereof will be omitted. FIG. 1 to FIG. 13 are used to describe the embodiments of the present invention. FIG. 1 shows a configuration of a PDP device 100 that is a digital display device according to the embodiment. FIG. 2 shows a structure of a front substrate 41 and a rear substrate 42 of a display panel unit (PDP) 40 before they are bonded to each other in the PDP device 100. FIG. 3 shows a field configuration in a sub-field method in the background art. FIG. 4 shows a configuration of an image signal processing unit 10 in a first embodiment which performs a processing according to a display method in the embodiment. FIG. 5 shows a configuration of a noise reducer unit 11 in the image signal processing unit 10. FIG. 6 to FIG. 9 show a processing example in the first embodiment. FIG. 10 shows a configuration example of an edge determining unit in the first embodiment. FIG. 11 shows an example of an SF lighting pattern in the background art. FIG. 12 shows an example of an error diffusion processing in the background art. FIG. 13 shows a configuration of a second embodiment.

### <Plasma display device>

First, a basic technical configuration will be described below. In FIG. 1, the plasma display device (PDP device) 100 has a display panel unit (PDP) 40, a drive circuit unit 30, a display control circuit unit 20, and an image signal processing unit 10, and the like. The drive circuit unit 30 is connected to the display panel unit 40, and the drive circuit unit 30 is connected also to the display control circuit unit 20. The image signal processing unit 10 is connected to the display control circuit unit 20. Note that such a configuration is not meant to be restrictive and it is possible to adopt the configuration in which the image signal processing unit 10 is provided in the display control circuit unit 20.

As a hardware configuration of the PDP device 100, for example, a PDP module in which the display panel unit 40 is bonded to a chassis unit (not shown), and an IC implemented with respective circuit units such as the display control circuit unit 20, a power source circuit unit (not shown), and the like are disposed on a rear face side of the chassis unit is provided. The circuit units on the rear face side of the chassis unit and an end portion of the display panel unit 40 are connected by a driver module (module where a driver IC and the like are implemented on a flexible substrate) corresponding to the drive circuit unit 30. The PDP module thus constituted is accommodated in an outer casing so that a PDP device set is configured.

Display data (Di) is externally inputted to the image signal processing unit 10 to perform an image signal processing to the data, and display data (Do) is outputted to an image data control unit 21. The display data (Di) has, for example, an RGB format and it is composed of signals of Dr, Dg, and Db corresponding to respective colors of R (red), G (green) and B (blue). In the image signal processing in the image signal processing unit 10, a display data conversion, a noise reduction processing for display data, and the like are performed. The image signal processing unit 10 is implemented with hardware, for example, an ASIC (application-specific integrated circuit).

The display control circuit unit 20 has an image data control unit 21 and a timing control unit 22. The display control circuit unit 20 forms a control signal for controlling the drive control circuit 30 based upon externally inputted interface signals [CLK (dot clock), Di (display data), B (blanking signal), Vsync (vertical synchronization signal), and Hsync (horizontal synchronization signal)] to control the drive circuit unit 30 according to the interface signals. The display control circuit unit 20 controls a data electrode drive circuit unit 31 based upon data signals (Di) accumulated in a frame memory unit 23 from the image data control unit 21. Also, the display control circuit unit 20 controls the data electrode drive circuit unit 31, a scanning electrode drive circuit unit 32, and an X and Y sustain electrode drive circuit units 33 and 34, respectively, based upon timing signals from the timing control unit 22.

The image data control unit 21 has the frame memory unit 23 and a frame memory control circuit unit 24. The image data control unit 21 controls supply of display data to the drive circuit unit 30. The timing control unit 22 produces a timing signal for controlling a display processing timing to supply the same to the frame memory control circuit unit 24, the data electrode drive circuit unit 31, the scanning electrode drive circuit unit 32, the X sustain electrode drive circuit unit 33, and the Y sustain electrode drive circuit unit 34. The frame memory unit 23 accumulates the display data (Do) from the image signal processing unit 10. The frame memory control circuit unit 24 controls the frame memory unit 23 according to a timing signal to output the display data from the frame memory unit 23 to the data electrode drive circuit unit 31.

The drive circuit unit 30 has the data (address) electrode drive circuit unit 31, the scanning electrode drive circuit unit 32, the X sustain electrode drive circuit unit 33, and the Y sustain electrode drive circuit unit 34. The drive circuit unit 30 drives electrodes of the PDP 40 according to control signals from the display control circuit unit 20. The data electrode drive circuit unit 31 drives a data line (address electrode) of the PDP 40 based upon display data from the frame memory unit 23. The scanning electrode drive circuit unit 32 drives a scanning line (corresponding to Y electrode) of the PDP 40. The X sustain electrode drive circuit unit 33 drives an X electrode of the PDP 40. The Y sustain electrode drive circuit unit 34 drives the Y electrode of the PDP 40 via the scanning electrode drive circuit unit 32. In a display screen of the PDP 40, address discharge for display cell determination is performed by the drive from the data electrode drive circuit unit 31 and the scanning electrode drive circuit unit 32. Next, sustain discharge for light emission of display cells is performed by the drive from the X and Y sustain electrode drive circuit units 33 and 34.

### <PDP>

In FIG. 2, the display panel unit (PDP) 40 is composed of substrates mainly made from two sheets of glasses such as a front substrate 41 and a rear substrate 42. The display panel unit (PDP) 40 is formed by bonding the front substrate 41 and the rear substrate 42 so that the substrates are opposed to each other via barrier ribs 48 and others to seal the spaces between the substrates filled with the discharge gas.

The front substrate 41 has a plurality of first (X) electrodes and second (Y) electrodes extending approximately in parallel with each other in a first direction. Each X electrode and each Y electrode serve as an electrode for sustain discharge and an electrode for scanning. Sustain discharge is performed between the X electrode and the Y electrode. Each X electrode and each Y electrode are composed of, for example, a bus electrode and a transparent electrode. The bus electrode is a straight bar-shaped electrode which is electrically connected to a driver side and is made of metal. The transparent electrode is an electrode which is electrically connected to the bus electrode and is made of an ITO (indium-tin oxide) layer forming a discharge slit. In this example, an X transparent electrode 51b and a Y transparent electrode 52b, and an X bus electrode 51a and a Y bus electrode 52a are formed on the front substrate 41 in three dimensions. The X electrodes and the Y electrodes on the front substrate 41 are covered with a dielectric layer 43 and a protective layer 44.

Also, a plurality of address electrodes (also referred to as data electrode) 47 which are third (A) electrodes are disposed on the rear substrate 42 so as to extend approximately in parallel to a second direction perpendicular to the X and Y electrodes. The address electrodes 47 are covered with a dielectric layer 45. A display cell is formed by a region defined by the X and Y electrodes and the address electrodes 47.

A plurality of barrier ribs 48 for forming, for example, stripe-like regions partitioned in a longitudinal direction (in the second direction) are formed between the front substrate 41 and the rear substrate 42. Phosphors (46r, 46g, and 46b) of respective colors of R, G, and B are distinctly applied on the regions partitioned by the barrier ribs 48. A pixel is composed of the display cells of the respective colors. Note that an aspect that barrier ribs are also provided in a lateral direction (in the first direction) can be adopted.

### <Sub-field method>

A sub-field method that is a display driving method for the PDP 40 will be described with reference to FIG. 3. As a field configuration, one field (FD) corresponding to one display screen (image frame) of the PDP 40 is composed of a plurality of time-divided sub-fields (SF). For example, one field is composed of ten SFs of SF1 to SF10. Each SF has a reset period (Tr), an address period (Ta), and a sustain period (Ts). Each SF is weighted according to difference in sustain period (Ts), namely, the number of sustain discharge times. For example, different sustain periods (Ts) are applied sequentially from the SF1 having the smallest weighting to the SF10 having the largest weighting.

In the display drive of the PDP 40, remaining charge is first made uniform as an operation during the reset period (Tr), and data memory (accumulation of wall charge) in a target cell is next performed by opposite discharge between the A electrode and the Y electrode as an operation during the address period (Ta). Then, discharge light-emission at the target cell is generated by surface discharge between the X electrode and the Y electrode as an operation during the sustain (sustain discharge) period (Ts).

### (First Embodiment)

FIG. 4A shows a first configuration of the image signal processing unit 10 in the PDP device 100. FIG. 4B shows an image signal processing unit 10-2 having a second configuration where an inverse γ correction processing unit 15 is added to a former stage of the image signal processing unit 10 having the first configuration. Since the first and second configurations are the same except that the inverse γ correction processing to the display data (Di) in the inverse γ correction processing unit 15 is added, either configuration can be adopted. In the description below, the first image signal processing unit 10 will be mainly explained. FIG. 5 shows a configuration of the noise reducer unit 11 in the image signal processing units 10 and 10-2.

The image signal processing unit 10 with the first configuration has respective circuit units of the noise reducer unit (noise reducing unit) 11, a dither processing unit 12, an error diffusion processing unit 13, and a data converting unit 14 in this order. The image signal processing unit 10-2 with the second configuration has the inverse γ correction processing unit 15 at the former stage of the noise reducer unit 11.

A block configuration of each of the image signal processing units 10 and 10-2 corresponds to the image signal processing steps, where a noise reducing step, a dither processing step, an error diffusion processing step, and a data converting step are applied to Di in this order along the order of the arranged blocks to output Do.

Di composed of Dr, Dg, and Db is inputted to the image signal processing unit 10 as display data input, and the image signal processing unit 10 outputs Do as display data output after image signal processing. The inverse γ correction processing unit 15 in the image signal processing unit 10-2 applies inverse γ correction processing (adjustment processing of a relationship between display data and display output) to Di and then outputs the same. The inverse γ correction processing is generally required in the PDP device. The noise reducer unit 11 applies a noise reduction processing described later to Di and then outputs the same. The dither processing unit 12 applies a known dither processing that is one example of noise measures to the output from the noise reducing unit 11 and then outputs the same. The error diffusion processing unit 13 applies an error diffusion processing such as illustrated in FIG. 12 to the output from the dither processing unit 12 and then outputs the same. The data converting unit 14 applies data conversion for outputting to the display panel unit 40 to the output from the error diffusion processing unit 13 and then outputs the same. The data conversion processing includes a processing for replacement to lighting data for each SF.

In the digital display device and the display method according to the first embodiment, in the signal processing for the display on the PDP 40 in the PDP device 100, low-pass filtering utilizing an LPF for each pixel is performed to respective signals (Dr, Dg, Db) of R, G, and B before the error diffusion processing is applied in the image signal processing unit 10. By combining the edge determination and level determination of a pixel with the LPF, the LPF is selectively applied to pixel regions other than those which are determined to be the edge portion or those which are in a level which does not require the filtering.

As shown in FIG. 4A, the image signal processing unit 10 has the characteristic noise reducer unit 11 at a former stage of the error diffusion processing unit 13, especially, at a former stage of the dither processing unit 12. As shown in FIG. 5, the noise reducer unit 11 is composed of noise reducers 11r, 11g, and 11b corresponding to Dr, Dg, and Db, respectively. Since these noise reducers have the same configuration, only noise reducer 11r for R is shown. Each of the noise reducer 11r, 11g, and 11b includes an LPF (low-pass filter) 111, an edge determining unit (image edge determining unit) 112, a lever determining unit (filter-application level determining unit) 113, and a data selecting unit 114.

In FIG. 5, a signal d1 in Di is inputted to the LPF 111 and the low-pass filtering is applied thereto to output the signal as a signal d2. The signal d1 is inputted to the edge determining unit 112 and an edge determination processing is performed to the signal according to a signal d4 having a set value, and then, a resultant signal d7 for control is outputted. A signal d2 is inputted to the level determining unit 113 and a level determination processing is performed to the signal according to a signal d5 having a set value, and then, a resultant signal d6 for control is outputted. The signal d1 and the signal d2 are inputted to the data selecting unit 114 and data is selected according to the signal d6 for control and the signal d7 for control, and then, the selected data is outputted to a latter stage as a signal d3.

The LPF 111 is a filter that cuts off/attenuates a high frequency component of a signal exceeding a reference frequency (cut-off frequency).

A set value (d4) of an edge level (referred to as EL) in the edge determining unit 112 is a threshold for determining an edge portion of an image. ELs for respective R, G, and B are defined as {ELr, ELg, ELb}. It is desirable that the set value (d4) of the EL corresponds to a level of noise in an input signal (d1) and each signal processing performed before the LPF 111 in this embodiment. For example, a level of noise which is uniform to a signal level at the input time varies depending on a signal level due to the inverse γ correction processing performed in the inverse γ correction processing unit 15. Therefore, all grayscales of a signal (for example, when the number of bits in a signal is 8, the number of all grayscales is 256) are divided into some areas. Then, EL is set for each area with taking into account the noise level and each gain processing.

A set value (d5) of a filter application level (referred to as FL) in the level determining unit 113 is a threshold for determining a filter application signal level to a pixel in an image. The filter application signal level is a signal (grayscale) level corresponding to application of the LPF111 to the pixel (passage of the pixel through the LPF111). FLs for respective R, G, and B are defined as {FLr, FLg, FLb}. It is desirable that the set value (d5) of the FL corresponds to a grayscale level where noise generation is observed. For example, when the configuration of this embodiment is utilized as noise measures at a specific grayscale generated due to a combination of a plurality of processings, since it is unnecessary to apply the low-pass filtering utilizing the LPF 111 to a pixel in a signal level where noise is not generated, the filter application level is set with taking into account the characteristics of these noises.

A set value to each of the determining units (112 and 113) may be a value obtained through internal setting using a predetermined value, or it can be appropriately set by a user through a control register or the like.

### <Edge determination>

An example of edge determination will be described. When low-pass filtering utilizing the LPF 111 is applied to all pixels in one image (character "A" is composed of binary pixels of white/black), the image blurs like bleeding as shown in FIG. 6B. That is, a grayscale between white and black occurs at an edge portion between a black character line and a white background. Therefore, an edge determination for performing the low-pass filtering to portions except for a pixel region of such an edge portion is required in order to maintain fineness of an image. In the edge determining unit 112, edge determination is performed according to a grayscale level difference between a target pixel and a pixel adjacent thereto in an image. A result of the edge determination (signal d7 indicating whether or not the target pixel is an edge portion) is outputted to the data selecting unit 114, and a signal d1 indicating not passing through the LPF 111 is selected for a pixel region at the edge portion.

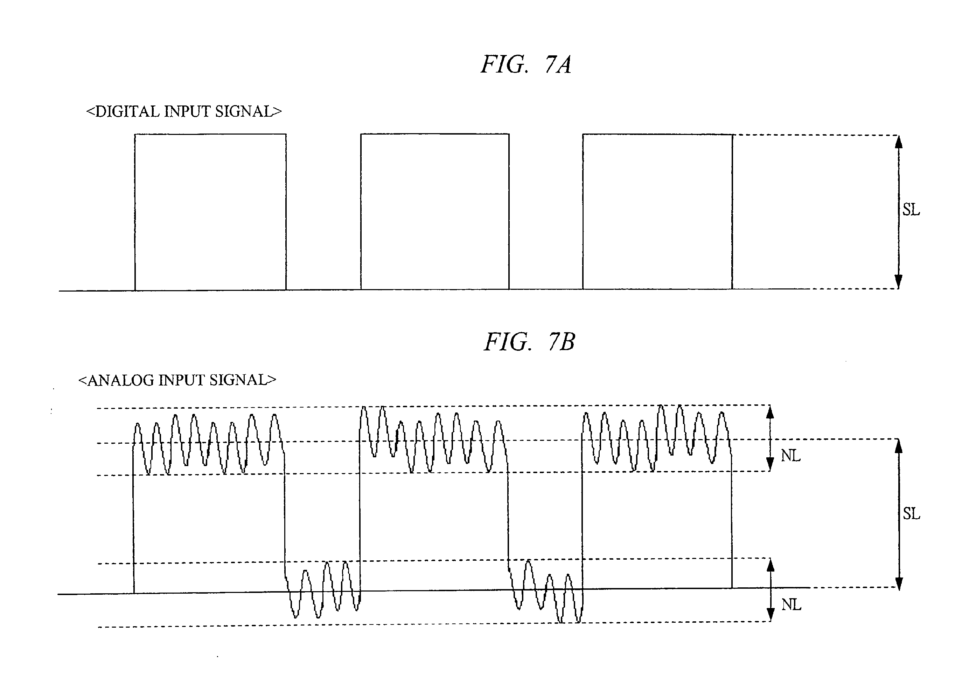

FIG. 7A and FIG. 7B show an example of an input signal of the display data (Di). As an example, a signal of pixels in the eighth line from the top in an image example in FIG. 6A is shown. FIG. 7A shows a case where Di is a digital input signal. FIG. 7B shows a case where Di is an analog input signal. As shown in FIG. 7B, a level of noise contained in an analog input signal, namely, a fluctuation width (noise level: shown as NL) is generally smaller than a signal level (signal level: shown as SL) of display data. This is apparent from the fact that content of a picture can be recognized even in an image whose quality is reduced due to noise.

Therefore, the threshold (EL) for the edge determination in the edge determining unit 112 shown in FIG. 5 is set to be larger than the noise level (NL) and smaller than the signal level (LS). By doing so, fluctuation of a signal due to noise is filtered by the LPF 111, while an edge portion of the image can be maintained.

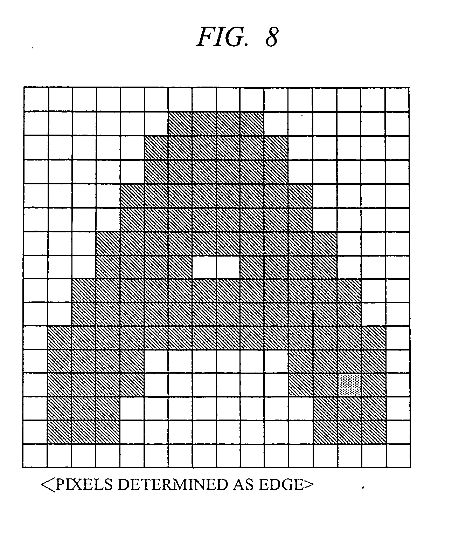

When the edge determination is performed by setting such a threshold (EL) for edge determination, as shown in FIG. 8, a region of the result of the edge determination (edge portion) based upon the grayscale level difference between the target pixel and the pixel adjacent thereto in the image coincides with the pixel region where a picture is blurred and expanded due to the low-pass filtering to all the pixels shown in FIG. 6B.

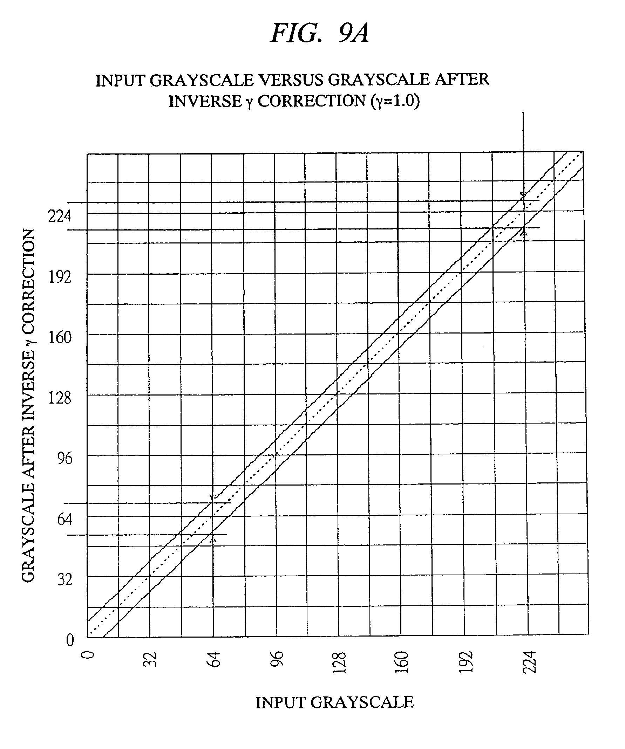

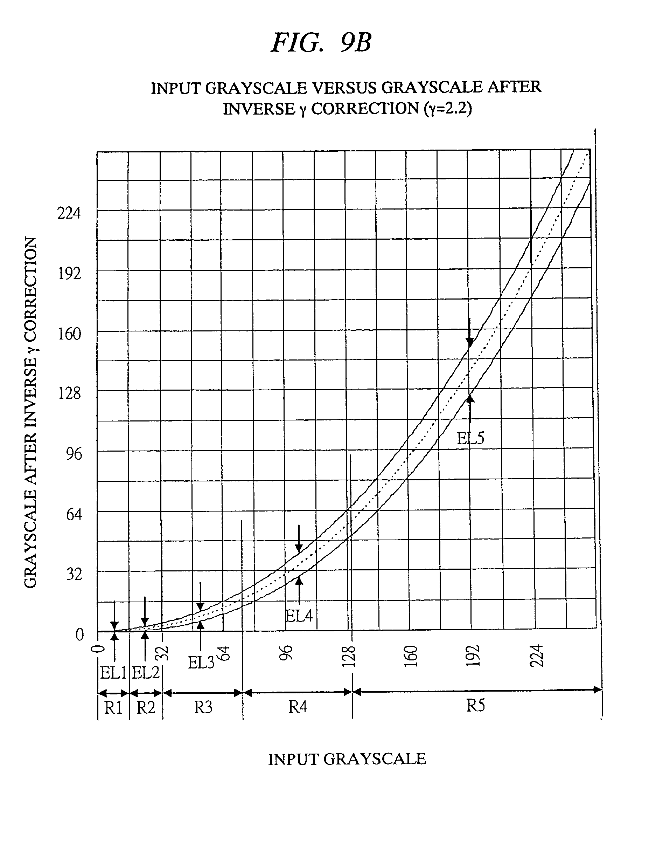

FIG. 9A shows a relationship between input grayscales (total of 256 grayscales) in display data (Di) and grayscales after inverse γ correction (γ=1.0) to the input grayscales. FIG. 9B shows a relationship between input grayscales (total of 256 grayscales) in display data (Di) and grayscales after inverse γ correction (γ=2.2) to the input grayscales. Note that each dotted line in FIG. 9A and FIG. 9B shows the center of a signal level SL and two solid lines therein show a width due to noise level NL to the signal level SL.

As shown in FIG. 9A, when grayscales of inputted display data (Di) are directly displayed, noise contained in an input signal (d1) is constant regardless of grayscale levels even at the time of a signal processing. On the other hand, as shown in FIG. 9B, when a certain gain processing such as an inverse γ correction processing in the inverse γ correction processing unit 15 is performed to an input signal (d1), a large difference occurs in noise level (NL) at the time of a signal processing after the gain processing depending on the grayscales. Regarding the grayscale 64 and the grayscale 224, for example, a difference in width of grayscale after the inverse γ correction therebetween becomes about 4 times. Therefore, it is desirable for the effective edge determination to provide some set values in accordance with the grayscales as the threshold (EL) for edge determination.

As shown in FIG. 9B, for example, a range of all input grayscales (256 values) is divided into five areas according to the grayscales, and these areas are defined as grayscale areas R1 to R5. Then, set values (EL1 to EL5) of the edge level (EL) are determined for the respective grayscale areas R1 to R5. The set values (EL1 to EL5) are appropriately selected and determined based upon noise levels (NL) in the grayscale areas R1 to R5, for example, the average noise level, the maximum noise level, or the minimum noise level thereof. Various methods in accordance with an object can be considered. For example, when an effect of noise suppression is emphasized, the maximum value (maximum noise level) of the noise level (NL) is selected, or when it is intended that occurrence of image blurring is suppressed as much as possible, the minimum value (minimum noise level) of the noise level is selected. In FIG. 9B, a case where average noise levels are used as an example of set values (EL1 to EL5) of ELs corresponding to the setting of the grayscale areas R1 to R5 is shown.

FIG. 10 shows a configuration of an edge determining unit 112-2 which is a configuration example of the edge determining unit 112 corresponding to the method described above. The edge determining unit 112-2 has a grayscale area determining unit 61, a threshold selecting unit 62, and a comparator 63. A signal (d1) of display data (Di) is inputted to the grayscale area determining unit 61, and the grayscale area determining unit 61 determines a grayscale area (R1 to R5) to which data of a target pixel (grayscale value) belongs based upon a signal (d11) of a level determining threshold (T: boundary values of R1 to R5) for grayscale area determination. A signal (d12) from the grayscale area determining unit 61 is inputted to the threshold selecting unit 62, and the threshold selecting unit 62 selects an edge determination threshold (ELx) corresponding to the grayscale area to which the pixel belongs based upon a signal (d13) of an edge level (EL1 to EL5) corresponding to the grayscale area (R1 to R5). The signal (d1) of display data (Di) is inputted to the comparator 63, and the comparator 63 determines whether or not the pixel region is an edge portion based upon a signal (d14) of the selected threshold (ELx) from the threshold selecting unit 62 and then outputs a resultant signal (d7).

According to the configuration example and the setting example described above, for example, the grayscale area (R1 to R5) is first determined using some upper bits in the display data (Di), and based upon the determination result, the edge level (ELx) at the time of the edge determination for each pixel in an image is selected from the plurality of set values of ELs (EL1 to EL5), thereby performing the edge determination.

### <Noise generated at specific grayscale>

Noise generated at a specific grayscale in a display image will be described. A case of the PDP 40 will be described as an example. A grayscale of a pixel in a display image on the PDP 40 is expressed by a combination (SF lighting pattern) of SF lighting/non-lighting as shown in FIG. 11 and by a multi-grayscale method such as an error diffusion process as shown in FIG. 12.

In FIG. 11, for example, when one field is expressed by 8 SFs (SF1 to SF8), the number of combinations of SF lighting (1)/non-lighting (0) is at most 256 (8 bits). In FIG. 11, lighting (1) of a pixel in SF is indicated by a white circle and non-lighting (0) is indicated by a bar. D is a grayscale value (0 to 255) indicated by an integer part (upper bit) of the input signal (d1). Also, K shows a specific grayscale corresponding to a noise generation region. The K indicates a set of close grayscales where a difference between SF lighting states is large, for example, it may be a set of 15 and 16, a set of 31 and 32, or a set of 127 and 128. Further, the K corresponds to a pixel of a carry to two's power.

Meanwhile, as shown in FIG. 12, in the error diffusion method, when data (Di) to be inputted is 10 bits (1024 grayscales) (integer part: D9 to 0), the lower two bits (fraction part: D1 to 0) corresponding to the difference from the above 8 bits are expressed by a method of performing diffusion processing to surrounding pixels as an error. In the error diffusion processing unit 13, such an error diffusion processing (one example) shown in FIG. 12 is performed. In the error diffusion processing unit 13, for example, when 127.5 is inputted as input data, 0.5 that is a fraction part of the input data is diffusion-processed as an error, and 127 is outputted when the result obtained by adding an error value (E) diffused from a surrounding pixel to 0.5 is less than 1, while 128 is outputted when it is equal to or more than 1. As a result, when the 127.5 is inputted, an image in a state where SF lighting/non-lighting of two grayscale values of 127 and 128 are mixed is displayed.

In the specific grayscales K shown in FIG. 11 such as the case of 127 and 128, since a difference between patterns of lighting/non-lighting of SFs is large (corresponding to a carry to eighth power of 2), when the two patterns of 127 and 128 are mixed, a difference in SF lighting/non-lighting is perceived as noise or flicker in the display. The specific grayscale (including K) mentioned in this specification means a grayscale where two patterns which have large difference in a state of the SF lighting/non-lighting are mixed by error diffusion.

Besides the influence due to the error diffusion method, when an input signal itself contains many noise components like a case where an original signal of the input display data (Di) is an analog signal, noise due to a specific grayscale is generated across the specific grayscale.

In the digital display device, an image failure such that noise (=specific grayscale noise) becomes significant at a specific grayscale where a difference on control becomes large occurs as described above. In the PDP device 100 of this embodiment, for addressing such specific grayscale noise, the LPF 111 is applied to each image region by utilizing the noise reducer unit 11 in the image signal processing unit 10.

### <Level determination>

An example of level determination will be described. For the purpose of reducing fluctuation of input signal only near the specific grayscale described above in order to suppress the influence on the fineness of an image by the application of the LPF 111 to the minimum level, a processing for limiting a range of a grayscale where noise is removed by the application of the LPF 111 according to a level of a pixel is performed in this level determination.

In the level determination in the level determining unit 113, a range of grayscales including the above-described specific grayscale is set according to the signal (d5) of the filter application level (FL), and it is determined whether or not the signal (d2) after the processing in the LPF 111 falls within the set grayscale range (FL). When the signal (d6) of the determination result falls within the set grayscale range (FL), the signal (d2) after the processing in the LPF 111 is selected and outputted in the data selecting unit 114. Alternatively, when the signal (d6) is out of the set grayscale range (FL), the signal (d1) before the processing in the LPF 111 is selected and outputted.

According to the configuration of the first embodiment, by applying the low-pass filtering to a signal of each pixel except for an edge portion of an image of input display data (Di) and a grayscale level portion that does not require the filtering, a fine image with reduced noise can be reproduced even when input display data (Di) is originally analog signal input.

### (Second Embodiment)

FIG. 13 shows a block configuration of a noise reducer unit 11-2 in a second embodiment.

In the second embodiment, a configuration where a plurality of LPFs 111 {111-1 to 111-n} different in characteristic or effect are arranged in parallel is adopted instead of the LPF 111 in the first embodiment. Also, a noise level determining unit 115 with a function to determine a level of noise contained in an input signal (d1) is further provided in the second embodiment. The LPF 111 to be applied to target data is switched by the filter selecting unit 116 based upon the determination result in the noise level determining unit 115. The low-pass filtering is performed utilizing an LPF 111 selected for each pixel to each signal (Dr, Dg, Db) of R, G, and B. The settings of the edge level (EL) and the filter application level (FL) are similar to those in the first embodiment.

Signals (d1) of display data (Di) are inputted to the LPFs 111{111-1 to 111-n}, and the LPFs 111{111-1 to 111-n} perform the low-pass filtering and input respective output signals to the noise level determining unit 115. The signals (d1) of display data (Di) and output signals from the respective LPF 111 are inputted to the noise level determining unit 115, and the noise level determining unit 115 determines a noise level (NL) based upon a signal (d8) of a set value of noise characteristic (referred to as NS) and then outputs a signal (d9) for selecting an LPF 111 to be applied to the filter selecting unit 116. The NL for each RGB is represented as {NLr, NLg, NLb}. Respective LPF output signals are inputted to the filter selecting unit 116, and the filter selecting unit 116 selects and outputs an output signal of the LPF 111 to be applied based upon the selecting signal (d9).

It is desirable that, when characteristic of the noise contained in a signal to be inputted into the digital display device is known, the set value (d8) of the noise characteristic (NS) in the noise level determining unit 115 corresponds to the characteristic. For example, when a level of noise contained in a signal is uniform over a grayscale and the level is known, an appropriate LPF 111 is selected based upon a set value corresponding to the level. Also, when characteristic (dependency on a grayscale or the like) of noise contained in a signal is known, determination about noise level is made based upon the characteristic and an appropriate LPF 111 is selected based upon the determination result.

According to the configuration of the second embodiment, since the low-pass filtering is performed to signals of respective pixels except for an edge portion and a grayscale level portion that does not require the filtering of an image of input display data (Di) like the first embodiment and further an appropriate LPF 111 is selected according to a noise level (NL) of the input display data (Di), more effective filtering can be performed and a fine image with reduced noise can be reproduced.

As another embodiment, the respective determining units described above may be configured separately or they may be configured in a combined manner.

In the foregoing, the invention made by the inventors of the present invention has been concretely described based on the embodiments. However, it is needless to say that the present invention is not limited to the foregoing embodiments and various modifications and alterations can be made within the scope of the present invention. The first and second embodiments show only basic configurations, and the present invention can be effectively applied to not only the above-described PDP device 100 but also all devices (digital display devices) having a unit for applying a digital signal processing to an analog signal to perform digital displaying. For example, the present invention can be effectively applied to a digital display device which has a television image receiving function, a video signal receiving function, a computer display image receiving function, or a function to receive an image signal (motion picture/still image signal) similar to them and performs an image signal processing based upon a digital signal of the display data received by the function to output the processed signal to a display unit.

The present invention can be utilized for various digital display devices and display systems such as a PDP device and a liquid crystal display device.

## Claims

1. A display method for a digital display device, comprising: in a signal processing for a digital signal of inputted display data,
a first step of reducing noise by applying a low-pass filter according to a pixel region in said display data; and
a second step of performing an error diffusion processing to said display data after said first step.

2. The display method for a digital display device according to claim 1,
wherein said first step includes:
an edge determining step of determining an edge portion in an image based upon said display data; and
a step of performing ON/OFF control of a processing of said low-pass filter according to a determination result in said edge determining step.

3. The display method for a digital display device according to claim 2,
wherein said first step includes:
a level determining step of determining a signal level in an image based upon said display data; and
a step of performing ON/OFF control of a processing of said low-pass filter according to a determination result in said level determining step.

4. The display method for a digital display device according to claim 3,
wherein the digital signal of the inputted display data is composed of a plurality of signals corresponding to respective colors, and
said first and second steps are performed individually to said plurality of signals corresponding to the respective colors in said display data.

5. The display method for a digital display device according to claim 4,
wherein said digital display device has a plurality of low-pass filters different in characteristic, and
said first step has a step of selecting and applying one low-pass filter from said plurality of low-pass filters according to a pixel region in said display data.

6. The display method for a digital display device according to claim 5,
wherein said first step includes:
a noise level determining step of determining a noise level regarding the display data based upon said display data; and
a step of switching the selection from said plurality of low-pass filters according to a determination result in said noise level determining step.

7. A digital display device comprising: means for performing a signal processing for outputting to a display unit based upon a digital signal of inputted display data,
wherein said means for performing a signal processing includes:
an error diffusion processing unit which performs an error diffusion processing to said display data;
a data converting unit which performs data conversion for outputting to said display unit based upon an output from said error diffusion processing unit; and
a noise reducing unit which is disposed at an former stage of said error diffusion processing unit, includes a low-pass filter, and reduces noise by applying said low-pass filter according to a pixel region in said display data.

8. The digital display device according to claim 7,
wherein said noise reducing unit includes:
an edge determining unit which determines an edge portion in an image based upon a digital signal of said display data; and
a first data selecting unit which performs switching between a signal which has passed through said low-pass filter and a signal which has not passed through said low-pass filter according to a determination result in said edge determining unit and then outputs the same.

9. The digital display device according to claim 8,
wherein said noise reducing unit includes:
a level determining unit which determines a signal level in an image based upon the signal of said display data which has passed through said low-path filter, and
a second data selecting unit which performs switching between a signal which has passed through said low-pass filter and a signal which has not passed through said low-pass filter according to a determination result in said level determining unit and then outputs the same.

10. The digital display device according to claim 9,
wherein the digital signal of said inputted display data is composed of a plurality of signals corresponding to respective colors, and
a processing by said noise reducing unit is performed individually to said plurality of signals corresponding to the respective colors in said display data.

11. The digital display device according to claim 10,
wherein said noise reducing unit includes:
a plurality of low-pass filters different in characteristic arranged in parallel as said low-pass filter, and
a low-pass filter is selected and applied from said plurality of low-pass filters according to a pixel region in said display data.

12. The digital display device according to claim 11, further comprising:
a noise level determining unit which determines a noise level regarding the display data based upon said display data;
and
a filter selecting unit which switches the selection from said plurality of low-pass filters according to a determination result in said noise level determining unit.
